# EUROPÄISCHE PATENTSCHRIFT

(11) **EP 1 524 105 B1**
(45) Veröffentlichungstag und Bekanntmachung des Hinweises auf die Patenterteilung: **09.12.2009**
(21) Anmeldenummer: 04024769.4
(22) Anmeldetag: 18.10.2004
(51) Int. Cl.: B32B 21/00, B32B 27/36, B32B 3/12, B29C 70/48

(54) **Leichtbau-Verbundmaterial sowie Verfahren zu dessen Herstellung**
Lightweight material and method of production
Matériau léger et son procédé de fabrication

(30) Priorität: 17.10.2003 DE 10349136; 12.12.2003 DE 10358295
(43) Veröffentlichungstag der Anmeldung: 20.04.2005
(73) Patentinhaber: EURO-COMPOSITES S.A., L-6401 Echternach (LU)
(72) Erfinder: Bottler, Oliver, 6401 Echternach (LU); Freres, Patrick, 6401 Echternach (LU)
(74) Vertreter: Held, Stephan

(56) Entgegenhaltungen:
- EP-A- 1 162 058

## Beschreibung

Die Erfindung betrifft ein Leichtbau-Verbundmaterial gemäß dem Oberbegriff des Anspruchs 1. Des weiteren betrifft die Erfindung ein Verfahren gemäß dem Oberbegriff des Anspruchs 27 zur Herstellung eines derartigen Leichtbau-Verbundmaterials.

Flächige Leichtbau-Verbundmaterialien der eingangs genannten Art sind bekannt und kommen in verschiedensten technischen Anwendungsbereichen, wie der Luft- und Raumfahrt, dem Schiffs- oder Kraftfahrzeugbau, zum Einsatz.

Als Träger- oder Kernmaterial werden bei den bekannten Verbundmaterialien, auch Verbundwerkstoffe bzw. Materialverbund genannt, vorzugsweise flächige, vorgeformte oder verformbare Leichtbaumaterialien, beispielsweise aus Schaumstoff, aus Hölzern mit geringer Dichte oder Materialien mit Wabenstrukturen, verwendet. Um diese Leichtbaumaterialien für die Herstellung von Sandwich-Bauteilen einzusetzen, ist es üblich, an zumindest einer der Oberflächen des Trägermaterials eine Deckschicht vorzusehen. Hierdurch wird die Festigkeit des Verbundmaterials erhöht, während das Verbundmaterial selbst ein geringes Gewicht aufweist, so dass die Vorteile einer Sandwichstruktur (Verhältnis Festigkeit / Gewicht) genutzt werden können. Als Deckschichten werden beispielsweise Folien oder Faserverbundwerkstoffschichten verwendet, die an der Flachseite des Trägermaterials, beispielsweise durch Kleben, nachträglich befestigt werden.

Nachteilig an den bekannten Leichtbau-Verbundmaterialien sowie den Verfahren zu deren Herstellung ist, dass bei der Herstellung der bekannten Verbundmaterialien die Ausbildung von Faserverbundwerkstoffen, welche aus in Harzen eingebettetem Fasermaterial bestehen, unmittelbar auf das Trägermaterial allenfalls sehr eingeschränkt möglich ist, wenn als Trägermaterial eine offene Schaumstoff- oder Wabenstruktur verwendet wird.

Die Faserverbundwerkstoffe müssen vielmehr zunächst getrennt vom Trägermaterial gefertigt werden, beispielsweise in Form sogenannter Prepregs, d.h. mit Harz preimpregnierte Gewebe oder Gelege, und können erst in einem weiteren Verfahrensschritt mit dem Trägermaterial verbunden werden. Dies ist insbesondere von Nachteil, wenn die Oberfläche des flächigen Trägermaterials nicht plan verläuft, sondern, wie beispielsweise bei Bootskörpern, einen dreidimensionalen Verlauf zeigt.

So sind als bekannte Verfahren für diesen Anwendungsbereich das Vakuuminfusionsverfahren, das Vakuuminjektionsverfahren, das RTM-Verfahren (RTM = Resin Transfer Moulding) sowie Abwandlungen von diesen Verfahren zu nennen, denen gemeinsam ist, unter Einsatz von Druck, d.h. Unterdruck oder Überdruck, flüssiges Harz in zum Beispiel ein Faser- oder Vliesmaterial einzubringen, das bereits auf dem mit der Deckschicht zu versehenen Trägermaterial platziert ist. Bisher werden diese bekannten Verfahren zur Herstellung von Verbundmaterialien dann eingesetzt, wenn das Träger- oder Kernmaterial an den mit der Deckschicht zu versehenen Oberflächen keine offene Struktur aufweist, oder Voll-Laminate ohne Kernmaterialien hergestellt werden sollen. Aus dem Stand der Technik sind jedoch auch Anwendungen bekannt, bei denen offene Träger- oder Kernmaterialien mit Hilfe des RTM-Verfahrens oder des Vakuuminjektionsverfahrens zur Herstellung von Verbundmaterialien mit einer Deckschicht aus in Harz eingebettetem Vlies- oder Fasermaterial beschichtet werden.

So ist aus der EP 0 786 330 A2 ein Verbundmaterial bekannt, das aus einem wabenartigen Trägermaterial, einer auf die Flachseite des Trägermaterials aufgebrachten, durch eine Klebeschicht am Trägermaterial gehaltenen, harzundurchlässigen Trennschicht sowie einer auf der Trennschicht ausgehärteten Deckschicht gebildet ist, welche aus einem in ein Harz eingebetteten Vlies- oder Fasermaterial besteht. Zur Herstellung des Verbundmaterials wird auf die Trennschicht zunächst ein Klebefilm aufgebracht. Anschließend wird die mit dem Klebefilm versehene Trennschicht auf die Flachseite des Trägermaterials mit Hilfe der Klebeschicht so aufgeklebt, dass die zur Flachseite des Trägermaterials hin offenen Waben möglichst vollständig verschlossen sind. Auf die Trennschicht wird das Vlies- oder Fasermaterial platziert, die gesamte Anordnung in eine Form gelegt und das Vlies- oder Fasermaterial mit Hilfe des RTM-Verfahrens mit Harz imprägniert, wobei die Trennschicht ein Eindringen des Harzes in die Wabenstruktur des Trägermaterials verhindert.

Die EP 1 281 505 A1 offenbart ein Verbundmaterial sowie ein Verfahren zu seiner Herstellung. Bei diesem bekannten Verfahren werden auf ein Trägermaterial zwei als Trennschichten dienende Klebeschichten aufgelegt, nämlich eine erste Klebeschicht aus Harz mit hoher Viskosität und eine auf diese aufgelegte undurchlässige zweite Klebeschicht. Auf diese beiden Klebeschichten wird anschließend ein Flies- oder Fasermaterial aufgelegt. Die Anordnung aus Trägermaterial, Klebeschichten und Flies- bzw. Fasermaterial wird in einer geschlossenen Form einer ersten Wärmebehandlung unterzogen, um die Harze der Klebeschichten reagieren zu lassen, wobei die erste Klebeschicht fest mit dem Trägermaterial und der zweiten Klebeschicht verbunden wird, während die zweite Klebeschicht fest mit der Unterseite des Vlies- oder Fasermaterials verbunden wird. Anschließend wird die Form evakuiert und das Vlies- bzw. Fasermaterial mit einem Harz imprägniert, welches unter einem Druck von 2 bis 3 bar in die Form injiziert wird.

In der DE 695 29 396 T2 ist ein Verfahren beschrieben, bei dem unter Einsatz des RTM-Verfahrens auf einem wabenartigen Trägermaterial eine Deckschicht aus in Harz eingebettetem Vlies- oder Fasermaterial aufgebracht wird, um ein Verbundmaterial zu fertigen. Zu diesem Zweck wird in einem ersten Schritt eine erste Schicht aus einem gehärteten Film auf das Trägermaterial aufgebracht und innerhalb der Form gehärtet. Anschließend wird auf die ausgehärtete Trennschicht eine Zwischenschicht in Form eines Prepegmaterials aufgebracht, welches gleichfalls in der Form ausgehärtet wird. Danach wird auf diese Zwischenschicht ein Vorformling aus Fasermaterial aufgelegt, welcher mit Hilfe des RTM-Verfahrens in der Form mit Harz imprägniert wird.

Die DE 36 25 534 A1 offenbart eine schwer entflammbare Bauplatte in Sandwichbauweise, die ein wabenartiges Trägermaterial aufweist, auf dessen Flachseiten jeweils eine Zwischenschicht aus Fasermaterial und eine Außenschicht, die gleichfalls aus einem Fasermaterial gefertigt ist, aufgebracht sind, wobei die Zwischenschicht mit einem Harz auf Epoxidharzbasis und die Außenschicht mit einem Harz auf Phenolharzbasis imprägniert sind. Zwischen der Zwischenschicht und der Außenschicht ist ferner eine dünne Aluminiumfolie aufgebracht, die im Falle eines Brandes als Wärmeisolierung zur Zwischenschicht dienen soll.

Die EP 1 162 058 A1 offenbart ein zweilagiges Leichtbau-Verbundmaterial, das aus einem Kernmaterial und einer darauf angeordneten, mit Harz imprägnierten Deckschicht besteht, wobei das Kernmaterial Fließkanäle zur Verteilung des Harzes aufweist. Die Deckschicht ist unmittelbar auf das Kernmaterial aufgebracht, so dass das Harz die Deckschicht vollständig durchdringen muss, um in den Bereich der Fließkanäle zu gelangen. Durch die Fließkanäle wird das Harz zwar auf dem Kernmaterial verteilt, allerdings erfolgt dabei keine gleichmäßige Verteilung des Harzes über die Deckschicht.

Es ist Aufgabe der Erfindung, ein Leichtbau-Verbundmaterial bzw. ein Verfahren zur Herstellung eines Leichtbau-Verbundmaterials anzugeben, bei dem bzw. durch dessen Einsatz eine verglichen mit dem Stand der Technik bessere Verteilung des Harzes im Faser- oder Vliesmaterial gegeben ist.

Die Erfindung löst die Aufgabe durch ein Leichtbau-Verbundmaterial mit den Merkmalen nach Anspruch 1.

Der Erfindung liegt als ein wesentlicher Gedanke zugrunde, durch den Einsatz einer harzundurchlässigen Trennschicht, welche zwischen dem Trägermaterial und der Deckschicht vorgesehen wird, Verfahren, insbesondere industriell angewendete Verarbeitungsverfahren, mit denen eine Deckschicht aus einem mit Harz getränkten Faser- oder Wabenmaterial unmittelbar auf dem Träger- oder Kernmaterial erzeugt werden kann, für offenporige Trägermaterialien, wie offene Wabenstrukturen oder offenporige Schaumstoffe verwendbar zu machen.

Mit Hilfe der harzundurchlässigen Trennschicht, die zwischen dem eigentlichen Trägermaterial und der Deckschicht angeordnet ist, wird bei der Herstellung des erfindungsgemäßen Verbundmaterials erreicht, dass das flüssige Harz bei der Fertigung der Deckschicht nicht in das Trägermaterial eindringen kann und dieses zumindest teilweise ausfüllt. Vielmehr kann das Harz, in dem das Faser- oder Wabenmaterial eingebettet ist, zur Ausbildung der Deckschicht unmittelbar auf dem Trägermaterial aushärten, so dass auch nichtplane Oberflächenverläufe des Trägermaterials auf einfache und elegante Weise mit einer als Verbundmaterial ausgebildeten Deckschicht versehen werden können. Es ist auch möglich, dass das an sich undurchlässige Trennmaterial Lochbohrungen aufweist, durch die das Harz an ausgewählten Stellen zur Verankerung in das Trägermaterial eindringen kann.

Um eine verbesserte Verteilung des Harzes bei Anwendung der bekannten Verfahren zu ermöglichen, sind gemäß einem weiteren wesentlichen Gedanken der Erfindung im Trägermaterial und/oder in der Trennschicht und/oder in dem Faser- oder Wabenmaterial der auszubildenden Deckschicht Fliesskanäle und/oder Öffnungen vorgesehen. Auf diese Weise kann das Harz durch die Fliesskanäle und/oder Öffnungen gezielt verteilt werden, wodurch das Fließverhalten des Harzes an der Ober- und Unterseite des Faser- oder Vliesmaterials verbessert wird. Ferner füllen sich die Öffnungen, sofern vorgesehen, mit Harz, so dass nach dem Aushärten des Harzes zusätzlich Harzkanäle, die in das Kernmaterial gegebenenfalls hineinragen, ausgebildet sind, durch die dem Verbundmaterial eine zusätzliche Stabilität und Steifigkeit gegeben wird.

Die Fliesskanäle und/oder Öffnungen sind hierbei vorzugsweise derart zueinander angeordnet, dass ein vorgegebenes Fliessverhalten oder eine vordefinierte Fliessfront des flüssigen Harzes im Faser- oder Wabenmaterial und/oder im Trägermaterial eingestellt werden kann.

Weitere Vorteile der vorliegenden Erfindung werden aus der nachfolgenden Beschreibung, den Zeichnungen sowie den Unteransprüchen ersichtlich.

So wird bei einer besonders bevorzugten Ausführungsform des erfindungsgemäßen Verbundmaterials vorgeschlagen, ein Faser- oder Wabenmaterials, bei dem die Fliesskanäle an mindestens einer der Flachseiten des Faser- oder Wabenmaterials ausgebildet sind, oder eine Trennschicht einzusetzen, an deren dem Faser- oder Wabenmaterial zugewandten Flachseite die Fliesskanäle ausgebildet sind. Hierdurch wird erreicht, dass sich das flüssige Harz zwischen den aneinander anliegenden Flachseiten der Trennschicht und des Faser- oder Wabenmaterials besonders gleichmäßig verteilt und das Harz nach dem Aushärten eine besonders gute Verbindung zwischen dem Faser- oder Wabenmaterial und der Trennschicht bildet.

Wird ein fasermaterial verwendet, sind die Fliesskanäle in die betreffende Flachseite vorzugsweise eingeprägt. Wird dagegen ein Wabenmaterial für die Deckschicht verwendet, sind die Fliesskanäle an der betreffenden Flachseite des Wabenmaterials ausgeformt.

Um eine möglichst gleichmäßige Verteilung des flüssigen Harzes sicherzustellen, verlaufen die Fliesskanäle vorzugsweise in einer wabenartigen Struktur, wodurch das flüssige Harz gezielt umgeleitet werden kann. Die wabenartige Struktur kann hierbei gegebenenfalls auch unregelmäßig entsprechend einem vorgegebenen Muster verlaufen, so dass ein definiertes Fliessverhalten des flüssigen Harzes gezielt vorgegeben werden kann.

Des weiteren wird vorgeschlagen, in der Oberfläche des Trägermaterials und/oder der Oberfläche der Trennschicht definierte Öffnungen, vorzugsweise in Form von Lochbohrungen vorzusehen, die normal zur Flachseite des Trägermaterials oder der Trennschicht verlaufen. Hierdurch kann das Harz durch die Öffnungen in das Trägermaterial eindringen, wodurch das Fließverhalten des Harzes an der Ober- und Unterseite des Faser- oder Wabenmaterials verbessert wird. Ferner füllen sich die Öffnungen mit Harz, so dass nach dem Aushärten des Harzes zusätzlich Harzkanäle durch das Kernmaterial gebildet sind, die dem fertigen Verbundmaterial eine erhöhte Stabilität und Steifigkeit verleihen.

Bei einer weiteren bevorzugten Ausführungsform des erfindungsgemäßen Verbundmaterials wird vorgeschlagen, ein flaches Trägermaterial einzusetzen, dessen beide Flachseiten als Oberflächen in erfindungsgemäßer Weise mit einer Trennschicht und einer Deckschicht versehen werden. Hierdurch wird erreicht, dass das Trägermaterial von beiden Flachseiten her verschlossen ist und als Sandwich-Material ausgebildet wird. Es ist jedoch auch denkbar, nur eine der beiden Flachseiten mit dem erfindungsgemäßen Schichtaufbau zu versehen, während die andere Flachseite in herkömmlicher Weise versiegelt ist, beispielsweise durch Verwendung einer aufgeklebten Folie.

Die Trennschicht ist vorzugsweise aus einer Polymerfolie gebildet, welche auf die Oberfläche des Trägermaterials aufgebracht ist. Als Folie eignet sich insbesondere eine Folie aus einem thermoplastischen Kunststoff, da diese einfach zu verarbeiten ist und mit vergleichsweise geringem Aufwand an den Oberflächenverlauf angepaßt werden kann.

Um eine besonders gute Verbindung der Deckschicht mit der Trennschicht zu erreichen, wird bei einer besonders bevorzugten Ausführungsform des erfindungsgemäßen Verbundmaterials vorgeschlagen, als Trennschicht ein Gewebe, ein Gelege, ein Geflecht, ein Gewirk, ein Gestrick oder ein Vlies einzusetzen. Die Dicke der Trennschicht ist hierbei so bemessen, dass das flüssige Harz beim Erzeugen der Deckschicht zwar gegebenenfalls in die Trennschicht eindringt, durch diese jedoch nicht bis zum Trägermaterial gelangt. Auf diese Weise ist die Trennschicht durch das Harz mit dem Fasermaterial der Deckschicht verbunden, sobald das Harz ausgehärtet ist. Hierdurch ergibt sich eine besonders gute Verbindung der Deckschicht mit der Trennschicht.

Das Gewebe, Gelege, Geflecht, Gewirk, Gestrick oder Vlies ist vorzugsweise aus einem thermoplastischen Kunststoff oder einem Fasermaterial gefertigt ist, wobei das Kunststoffoder Fasermaterial bevorzugt zumindest annähernd dieselben physikalischen Eigenschaften hinsichtlich des Elastizitätsmoduls oder der temperaturabhängigen Ausdehnungskoeffizienten hat, wie das Fasermaterial der Deckschicht.

Gegebenenfalls ist es auch denkbar, die Trennschicht aus einem Material auszubilden, das sich nach dem Aushärten des Harzes ganz oder teilweise aufgelöst hat.

Des weiteren ist es denkbar, sowohl die als Folie ausgebildete Trennschicht als auch die als Gewebe, Gelege, Geflecht, Gewirk, Gestrick oder Vlies ausgebildete Trennschicht aus Kunststoffen zu fertigen. Als Material hierfür eignen sich alle zu Folien oder Fasern zu verarbeitende Polymere. Besonders bevorzugt sind als Polymere Polyester, Polyethylen, Polyvinylchlorid, Polypropylen, Polyamid, Polycarbonat, Polyacryl, Polyacrylnitril, Polytetrafluorethylen oder Gemische aus diesen Kunststoffen.

Bei einer alternativen Ausführungsform dient als Trennschicht eine Schaumstofflage oder eine Schaumstofffolie. Auch hier besteht, ähnlich wie bei der glatten Folie, der Vorteil, dass sich die Schaumstofflage oder Schaumstofffolie an die Oberfläche des Trägermaterials gleichmäßig anschmiegen kann. Des weiteren besteht darüber hinaus der Vorteil, dass die Schaumstofflage oder Schaumstofffolie zu einer erhöhten Wärmedämmung beim erfindungsgemäßen Verbundmaterial führt. Das Schaumstoffmaterial der Schaumstofflage oder der Schaumstofffolie kann dabei geschlossenporig oder auch offenporig ausgebildet sein.

Die Schaumstofflage oder die Schaumstofffolie kann aus allen zu Schäumen zu verarbeitenden Materialien gefertigt sein. Bevorzug ist sie aus Polyurethan, linearem oder vernetztem Polyvinylchlorid, Polyetherimid, Polymethacrylimid, einem Phenolharz, einem Epoxidharz oder aus einem Gemisch von zumindest zwei der zuvor genannten Kunststoffe gefertigt.

Des weiteren wird bei einer weiteren Ausführungsform des erfindungsgemäßen Verbundmaterials vorgeschlagen, als Trennschicht eine Metallfolie, vorzugsweise aus Aluminium, Stahl, Bronze oder Kupfer, einzusetzen. Auch eine dünne Bleifolie ist als Trennschicht geeignet. Durch den Einsatz einer Metallfolie als Trennschicht wird erreicht, dass das erfindungsgemäße Verbundmaterial eine abschirmende Wirkung beispielsweise gegenüber elektromagnetischen Wellen aufweist, so dass die Trennschicht eine Doppelfunktion erfüllt, nämlich einerseits ihre erfindungsgemäße Verwendung, ein Eindringen von flüssigem Harz in die das Trägermaterial zu verhindern, und andererseits ihre Wirkung als Abschirmung.

Um die Trennschicht am Trägermaterial zu befestigen, wird vorgeschlagen, zwischen der Trennschicht und dem Trägermaterial eine erste Klebeschicht vorzusehen. Die Klebeschicht wird beispielsweise in Form einer Klebefolie auf dem Trägermaterial aufgebracht. Anschließend wird die Trennschicht, beispielsweise ein Trenngewebe, auf die Klebefolie aufgelegt und mit dieser verklebt.

Des weiteren wird vorgeschlagen, zusätzlich oder alternativ auch zwischen der Trennschicht und der Deckschicht eine Klebeschicht vorzusehen. Mit dieser Klebeschicht kann das Fasermaterial, mit dem die Deckschicht gebildet werden soll, vor dem Aufbringen des flüssigen Harzes an der Trennschicht in einer definierten Lage gehalten werden. Außerdem dient diese Klebeschicht als zusätzliche Verklebungsmöglichkeit zwischen Trennschicht und Deckschicht.

Die Klebeschicht bzw. die Klebeschichten sind vorzugsweise als ein Klebefilm auf Basis eines Epoxidharzes, eines Polyesterharzes, eines Phenolharzes, eines Vinylesterharzes, eines Acrylharzes, eines Acrylatklebstoffes oder eines Silans ausgebildet. Es können jedoch auch Klebefilme eingesetzt werden, die auf Basis eines Gemisches von mindestens zwei der zuvor genannten Harze gebildet sind.

Um den Herstellungsprozeß zu vereinfachen, wird ferner vorgeschlagen, die Klebeschicht bzw. die Klebeschichten bereits vorab auf der Trennschicht vorzusehen, da auf diese Weise ein getrenntes Aufbringen der Klebeschichten von der Trennschicht entfallen kann.

So wird beispielsweise vorgeschlagen, wenn als Trennschicht eine Kunststoff- oder Metallfolie zum Einsatz kommt, die Folie an der Vorder- und gegebenenfalls Rückseite vorab mit einem Klebefilm zu versehen.

Als Fasermaterial für die Deckschicht dient vorzugsweise ein Gewebe, ein Gelege, ein Geflecht, ein Gewirk, ein Gestrick, ein Vlies oder ein Hybridmaterial, da diese Art Fasermaterial vom flüssigen Harz gleichmäßig durchtränkt werden kann und nach dem Aushärten des Harzes der Deckschicht, je nach verwendeter Systemkombination, eine hohe mechanische Festigkeit bei gleichzeitig hervorragenden elastischen Eigenschaften verleiht.

Um die mechanischen Eigenschaften des Fasermaterials gezielt zu beeinflussen, werden für diese Arten von Fasermaterial vorzugsweise Materialien verwendet, die Glasfasern, Carbon-Fasern, Aramid-Fasern, Keramik-Fasern, Metall-Fasern und/oder Metalldrähte aufweisen. Alternativ werden für diese Arten von Fasermaterial auch Materialien eingesetzt, welche auf thermoplastischen Kunststoffen oder Elastomeren basieren.

Als Harzmaterial, in dem das Fasermaterial eingebettet ist, wird vorzugsweise ein Epoxidharz, ein Polyesterharz, ein Phenolharz, ein Vinylesterharz, ein Acrylharz, ein Silan oder ein Gemisch mindestens zwei dieser Harze verwendet, da diese Harze gut verarbeitbar sind und vergleichsweise schnell aushärten.

Bei einer besonders bevorzugten Ausführungsform des erfindungsgemäßen Verbundmaterials weist das Trägermaterial eine vorzugsweise gleichmäßige, gegebenenfalls auch harzgetränkte Wabenstruktur auf. Durch die gleichmäßige Wabenstruktur wird eine besonders hohe mechanische Festigkeit insbesondere in Längsrichtung der einzelnen Waben bei geringem spezifischen Gewicht erreicht. Die Waben verlaufen hierbei vorzugsweise mit ihren Längsrichtungen etwa lotrecht zur Trenn- und Deckschicht.

Die Wabenstruktur kann aus Metall, vorzugsweise aus Aluminium, gebildet sein. Für Einsatzzwecke, bei denen das Gewicht des Verbundmaterials im Vordergrund steht, werden Wabenstrukturen aus Papier oder Pappe als Trägermaterial vorgeschlagen. Diese aus Papier oder Pappe gebildeten Wabenstrukturen können zusätzlich mit Fasern verstärkt sein. So werden besonders bevorzugt Wabenstrukturen aus Papier oder Pappe für das erfindungsgemäße Verbundmaterial eingesetzt, bei denen das Papier- oder Pappmaterial mit Aramid-Fasern, insbesondere Nomex®-Fasern oder Kevlar®-Fasern, Polyesterfasern, PVC-Fasern Polyacrylfasern, Polypropylenfasern oder einem Gemisch aus mindestens zwei dieser Faserarten ergänzt ist. Die Wabenstrukturen können gegebenenfalls zusätzlich mit Harz getränkt sein. Des weiteren kann die Wabenstruktur aus einem Kunststoffmaterial gefertigt sein. Ferner ist es denkbar, dass in die Wabenstruktur ein Füllmaterial, beispielsweise Mikroballons, gefüllt ist.

Zusätzlich wird vorgeschlagen, anstelle einer Wabenstruktur als Trägermaterial ein vorzugsweise offenporiges Schaumstoffmaterial einzusetzen. Die Verwendung von Schaumstoffmaterial als Trägermaterial ist besonders dann von Vorteil, wenn das Verbundmaterial eine hohe Wärmedämmwirkung aufweisen soll. Das Schaumstoffmaterial ist hierbei vorzugsweise aus Polyurethan, linearem oder vernetztem Polyvinylchlorid, Polyetherimid, Polymethacrylimid, Phenolharz, Epoxidharz oder Gemischen derselben gefertigt. Es ist jedoch auch denkbar, aus Metall aufgeschäumte Schaumstoffmaterialien zu verwenden.

Ferner wird ein erfindungsgemäßes Leichtbau-Verbundmaterial vorgeschlagen, bei dem das Trägermaterial aus Balsa-Holz gefertigt ist.

Gemäß einem zweiten Aspekt betrifft die Erfindung ein Verfahren zur Herstellung eines Leichtbau-Verbundmaterials, insbesondere ein Verfahren zur Herstellung eines Leichtbau-Verbundmaterials, wie es zuvor beschrieben worden ist. So soll das mit dem erfindungsgemäßen Verfahren herzustellende Verbundmaterial ein Leichtbau-Trägermaterial, eine auf mindestens einer der Oberflächen des Trägermaterials vorgesehene Deckschicht aus einem in einem Harzmaterial eingebetteten Faser- oder Wabenmaterial und eine zwischen dem Trägermaterial und der Deckschicht angeordnete harzundurchlässige Trennschicht aufweisen.

Zur Herstellung dieses Verbundmaterials wird zunächst auf die zu beschichtende Oberfläche des Trägermaterials die Trennschicht aufgebracht. Anschließend wird auf die Trennschicht das Faser- oder Wabenmaterial der Deckschicht aufgebracht. Das Faser- oder Wabenmaterial wird anschließend mit einem flüssigen Harz getränkt, das zur Bildung der Deckschicht auf der Trennschicht aushärtet, wobei die am Faser- oder Wabenmaterial, an der Trennschicht und/oder dem Trägermaterial ausgebildeten Fliesskanäle und/oder Öffnungen eine gleichmäßige Verteilung des Harzes bewirken.

Zum Tränken des Fasermaterials mit dem flüssigen Harz wird bei einer besonders bevorzugten Ausführungsvariante die sich ergebende Anordnung aus Trägermaterial, Trennschicht und Fasermaterial in einen abgeschlossenen Raum eingesetzt. In den abgeschlossenen Raum wird das flüssige Harz geleitet, das in das auf der Trennschicht aufgebrachte Fasermaterial eindringt. Die Trennschicht verhindert dabei, dass das flüssige Harz in das Trägermaterial eindringt. Sobald das flüssige Harz zumindest soweit ausgehärtet ist, dass sich die Gestalt der Deckschicht, die aus dem in dem ausgehärteten Harz eingebetteten Faser- oder Vliesmaterial gebildet ist, nicht mehr ändert, kann das Verbundmaterial dem abgeschlossenen Raum entnommen werden.

Um das Eindringen des flüssigen Harzes in das Fasermaterial zu beschleunigen, wird bei einer besonders bevorzugten Variante des erfindungsgemäßen Verfahrens vorgeschlagen, das flüssige Harz unter Druck in den abgeschlossenen Raum einzubringen. Das flüssige Harz kann hierzu mit einem Druck in einem Bereich von etwa 0,2 bis 8 bar in den abgeschlossenen Raum gefördert werden. Der Druck kann jedoch auch höher sein, wenn die Form dem Förderdruck standhält.

Der abgeschlossene Raum wird bei einer Variante des Verfahrens, insbesondere wenn das Verfahren zur Massenfertigung von Verbundmaterialien eingesetzt werden soll, durch eine feste Form aus mindestens zwei Formteilen gebildet, deren Innenkonturen der späteren Außenkontur des fertigen Bauteils entsprechen. Die Anordnung aus Trägermaterial, Trennschicht und Fasermaterial wird in die offene Form eingelegt, die Form anschließend geschlossen und das flüssige Harz unter Druck in die Form eingefüllt. Nach dem Aushärten des Harzes entspricht die Außenkontur des Verbundmaterials der durch die Form vorgegebenen Gestalt. Zum Aushärten des Harzes wird die Form zumindest abschnittsweise erwärmt.

Alternativ ist es auch möglich, in der geschlossenen Form einen Unterdruck zu erzeugen, der vorzugsweise einem etwa 55- bis 95-prozentigen Vakuum entspricht. Anschließend wird das flüssige Harz mit geringem Überdruck in die geschlossene Form geleitet.

Bei einer alternativen Variante des erfindungsgemäßen Verfahrens wird der abgeschlossene Raum durch eine Folie gebildet, unter der die Anordnung positioniert wird. Die Luft in dem abgeschlossenen Raum unter der Folie, in dem sich die Anordnung befindet, wird anschließend abgepumpt, so dass unter der Folie ein Unterdruck erzeugt wird. Dieser entspricht vorzugsweise einem etwa 55- bis 95-prozentigen Vakuum. Anschließend wird das Harz mit Umgebungsdruck unter die Folie geleitet.

Alternativ ist es auch möglich, die komplette Anordnung aus Trägermaterial, Trennschicht und Fasermaterial zum Tränken des Fasermaterials mit flüssigem Harz in ein Harzbad zumindest abschnittsweise einzutauchen, sofern das Trägermaterial, beispielsweise eine Wabenstruktur, an den Stellen, an den es in das Harzbad eingetaucht wird, nach außen hin durch die Trennschicht abgedeckt ist.

Haftet die Trennschicht nicht in ausreichendem Maß an der Oberfläche des Trägermaterials an, oder ist die Trennschicht mit keiner zusätzlichen Klebeschicht versehen, wird ferner vorgeschlagen, vor dem Aufbringen der Trennschicht auf die Flachseite des Trägermaterials eine Klebeschicht aufzubringen, auf welche wiederum die Trennschicht aufgelegt wird.

In entsprechender Weise wird bei einer weiteren Variante des erfindungsgemäßen Verfahrens vorgeschlagen, vor dem Aufbringen des die Deckschicht bildenden Fasermaterials auf die Trennschicht eine Klebeschicht aufzubringen, auf welche wiederum das Fasermaterial aufgebracht wird.

Um eine möglichst gleichmäßige und schnelle Aushärtung des flüssigen Harzes zu erreichen, wird bei einer besonders bevorzugten Variante des erfindungsgemäßen Verfahrens der abgeschlossene Raum unter Unter- oder Überdruck gesetzt. Dies ist einerseits möglich in dem bei Verwendung einer geschlossenen Form in der Form ein entsprechender Überdruck erzeugt wird, der beispielsweise bei etwa 2 bar liegt. Wird dagegen eine Vakuumfolie verwendet, wird der Unterdruck unter der Folie über einen vorgegebenen Zeitraum aufrechterhalten.

Um das bereits ausgehärtete Harz nachzuhärten, wird ferner vorgeschlagen, die Anordnung aus Trägermaterial, Trennschicht und Fasermaterial nach dem Aushärten des Harzes einer Wärmebehandlung zu unterziehen, bei der die Anordnung über einen vorgegebenen Zeitraum auf eine Temperatur in einem Bereich von etwa 50°C bis 200°C erwärmt wird. Hierdurch wird das Aushärten des Harzes weiter beschleunigt. In Abhängigkeit von dem jeweils verwendeten Harz kann es durch die zusätzliche Wärmebehandlung noch zu einer weiteren Vernetzung des Harzes kommen, wodurch die Festigkeit des als Deckschicht dienenden Faserverbundmaterials weiter erhöht wird.

Um das Nachhärten gezielt auf das jeweilige Harz einzustellen, wird ferner, je nach verwendeter Materialkombination, vorgeschlagen, die Wärmebehandlung in zwei Schritten zu vollziehen, wobei die Anordnung in dem ersten Wärmebehandlungsschritt über einen vorgegebenen ersten Zeitraum auf eine Temperatur von etwa 50°C bis 90°C und in dem zweiten Wärmebehandlungsschritt über einen vorgegebenen zweiten Zeitraum auf eine Temperatur von etwa 100°C bis 200°C erwärmt wird.

Nachfolgend wird der Erfindung anhand einer Verfahrensvariante unter Bezugnahme auf die beigefügte Zeichnung näher erläutert. Darin zeigt:
- Fig. 1: einen ersten Schritt des erfindungsgemäßen Verfahrens in schematischer, geschnittener Darstellung, in dem auf ein Trägermaterial beidseitig Klebefilme aufgebracht werden;
- Fig. 2: einen zweiten Schritt des erfindungsgemäßen Verfahrens in schematischer, geschnittener Darstellung, in dem auf die Klebefilme beidseitig eine Trennfolie aufgebracht wird;
- Fig. 3: einen dritten Schritt des erfindungsgemäßen Verfahrens in schematischer, geschnittener Darstellung, in dem auf jede Trennfolie ein zweiter Klebefilm aufgebracht wird;
- Fig. 4: eine Unteransicht eines Fasermaterials in Form eines Polyestervlieses, an dessen Unterseite wabenförmige Fliesskanäle ausgebildet sind;
- Fig. 5: einen vierten Schritt des erfindungsgemäßen Verfahrens in schematischer, geschnittener Darstellung, in dem auf die beiden Klebefilme jeweils das Fasermaterial aufgebracht wird;
- Fig. 6: einen fünften Schritt des erfindungsgemäßen Verfahrens in schematischer, geschnittener Darstellung, in dem die Anordnung aus Trägermaterial, Klebeschichten, Trennfolien und Fasermaterial unter eine Vakuumfolie gelegt und ein flüssiges Harz eingefüllt wird; und
- Fig. 7: eine geschnittene Darstellung des fertigen Verbundmaterials.

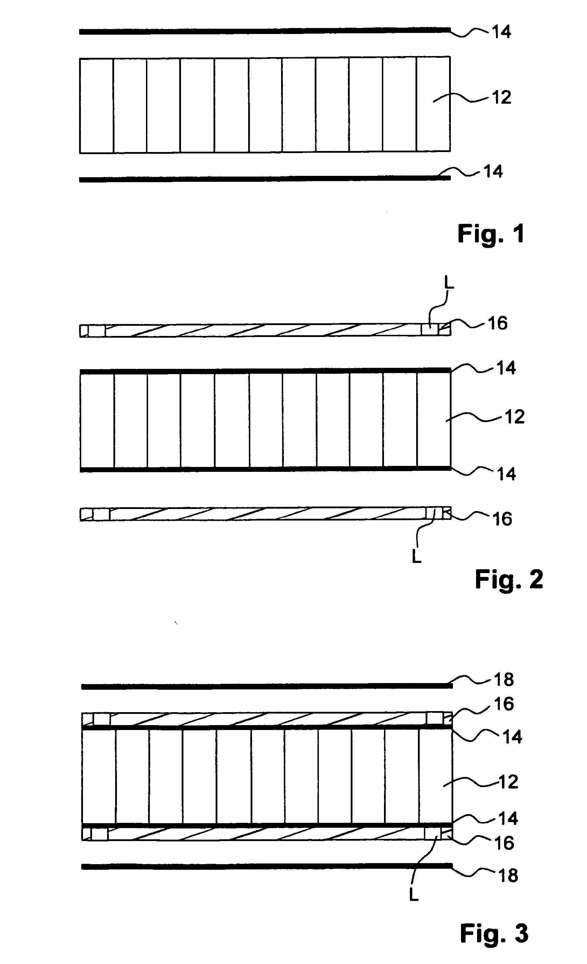

In den Fig. 1 bis 3, 5 und 6 sind die verschiedenen Schritte des erfindungsgemäßen Verfahrens zur Herstellung eines erfindungsgemäßen Verbundmaterials 10 dargestellt.

In dem in Fig. 1 dargestellten, ersten Verfahrensschritt wird zunächst auf die beiden Flachseiten eines Trägermaterials 12, im vorliegenden Fall eine phenolharzgetränkte Wabenstruktur, welche mit Aramid-Fasern, insbesondere Nomex®-Fasern, verstärkt ist, jeweils eine Klebeschicht 14 aufgelegt. Bei der Klebeschicht 14 handelt es sich um eine Epoxidharzklebeschicht, welche von Hand auf der jeweiligen Flachseite des Trägermaterials 12 positioniert wird. In der Klebeschicht 14 sind an verschiedenen Stellen Öffnungen ausgebildet (nicht dargestellt) deren Funktion später noch erläutert wird.

In einem zweiten Verfahrensschritt, der in Fig. 2 gezeigt ist, werden die beiden Klebefolien 14 mit einem Heizluftfön kurz erwärmt, bis die Oberfläche klebrig ist. Anschließend wird auf jede Klebeschicht 14 eine Trennschicht 16, die zuvor oberflächengereinigt wurde, aufgelegt und mit der Klebeschicht verklebt. Als Trennschicht 16 wird im vorliegenden Fall eine Polyesterfolie verwendet. In den Trennschichten 16 sind gleichfalls mehrere Öffnungen L ausgebildet, welche zu den an den Klebeschichten 14 ausgebildeten Öffnungen ausgerichtet werden, um einen Fliessöffnung auszubilden.

In einem dritten Verfahrensschritt, der in Fig. 3 gezeigt ist, wird auf jede der beiden Trennschichten 16 eine weitere Klebeschicht 18 aufgebracht, bei der es sich beispielsweise um eine Epoxidharzklebeschicht handelt, welche von Hand auf die jeweilige Trennschicht 16 aufgelegt wird, wobei auch in der Klebeschicht Öffnungen (nicht dargestellt) ausgebildet sind, die zu den Öffnungen L in der Trennschicht 16 ausgerichtet werden. Anschließend werden auch hier die Klebeschichten 18 mit einem Heizluftfön soweit erwärmt, bis deren Oberflächen klebrig sind.

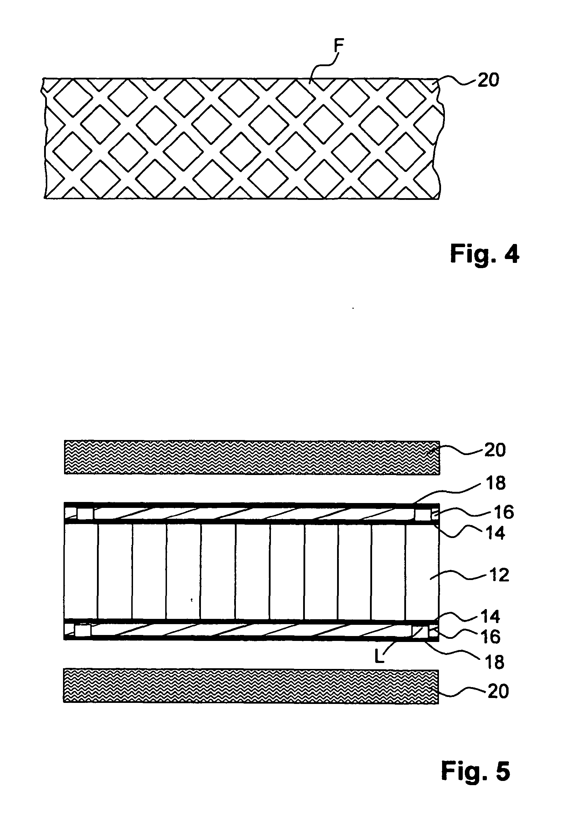

In Fig. 4 ist die Unterseite eines aus einem Polyester-Vlies gefertigten Fasermaterials 20 gezeigt. Die Unterseite des Fasermaterials 20 ist hierbei mit wabenförmig zueinander verlaufenden Fliesskanälen F versehen, die in die Unterseite eingeformt sind.

Fig. 5 zeigt einen vierten Verfahrensschritt, in dem auf die beiden Klebeschichten 18 jeweils das Fasermaterial 20 aufgelegt und mit den Klebeschichten 18 verklebt wird.

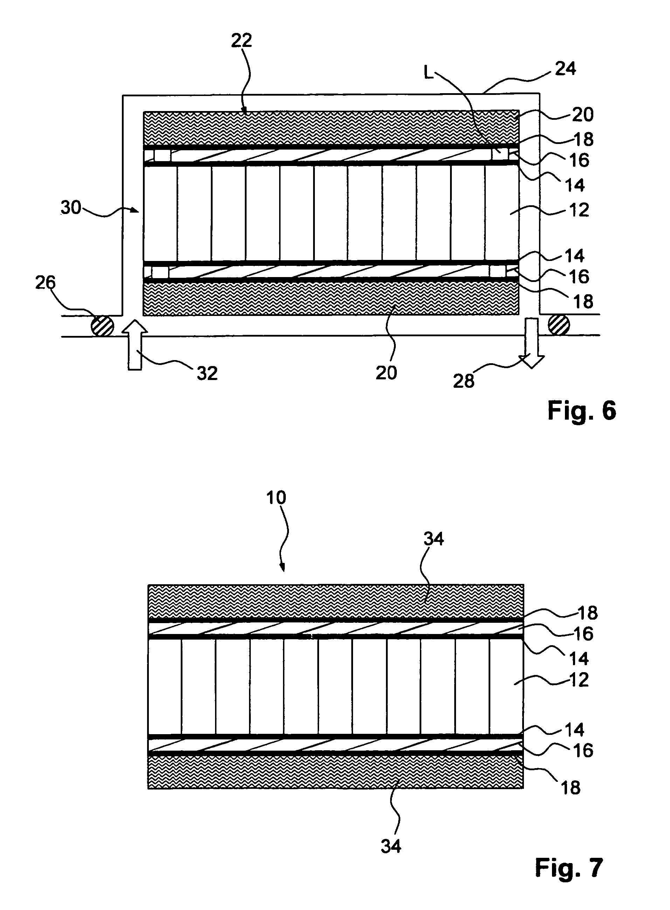

Die so gebildete Anordnung 22 aus Trägermaterial 12, Klebeschichten 14, Trennschichten 16, Klebeschichten 18 und Fasermaterial 20 wird anschließend von einer Vakuumfolie 24, beispielsweise einer Silikonfolie oder einer Elastomerfolie, bedeckt, wie in Fig. 6 dargestellt ist, welche an ihren Rändern durch eine umlaufende Dichtung 26 gegenüber der Umgebung abgedichtet ist. Anstelle der einzelnen Vakuumfolie 24 kann auch eine mehrfach verwendbare Silikonfolie bzw. eine Silikonabdeckhaube zum Einsatz kommen. Anschließend wird unter der Vakuumfolie 24 ein Unterdruck erzeugt, der etwa einem 75-bis 90-prozentigem Vakuum entspricht, wie durch den Pfeil 28 angedeutet ist. Sobald ein ausreichender Unterdruck in dem abgeschlossenen Raum 30 unter der Vakuumfolie 24 wirkt, wird ein flüssiges Harz 32, beispielsweise ein Epoxidharz unter die Vakuumfolie 24 eingebracht, wie durch den Pfeil angedeutet ist.

Das flüssige Harz 32 dringt in das an den beiden Flachseiten gehaltene Fasermaterial 20 ein, strömt entlang der an den Unterseiten des Fasermaterials 20 jeweils ausgebildeten Fliesskanäle F (vgl. Fig. 4) und durchtränkt das Fasermaterial 20. Dabei bewirken die Fliesskanäle F durch ihren Verlauf einen definierte Fliessfront des Harzes 32 innerhalb des Fasermaterials 20, wobei insbesondere die beiden Trennschichten 16 verhindern, dass das Harz 32 in die Wabenstrukturen des Trägermaterials 12 eindringt. Nur an den Stellen der Trennschicht, an denen die Öffnungen L ausgebildet sind, kann das flüssige Harz 32 auch in die Wabenstruktur des Trägermaterials 12 eindringen, wodurch nach dem Aushärten definierte Harzverbindungen im Trägermaterial 12 entstehen.

Sobald das flüssige Harz 32 ausgehärtet ist, wird unter der Vakuumfolie 24 bei Raumtemperatur ein Unterdruck aufrechterhalten, der einem etwa 75- bis 95-prozentigem Vakuum entspricht, durch den das Aushärten des Harzes 32 weiter beschleunigt wird. Dieser Vorgang wird als Kaltaushärten bezeichnet.

Nach einem vorgegebenen Zeitraum von beispielsweise 12 Stunden wird die Anordnung 22 nach dem Kaltaushärten zwei Nachhärteschritten unterzogen, in denen die Anordnung 22 zunächst in einem Ofen über einen Zeitraum von 2 Stunden bei etwa 80°C warmbehandelt wird. Anschließend wird die Anordnung 22 über einen Zeitraum von etwa 1 Stunde bei etwa 120°C durchgehärtet. Es ist jedoch zu bemerken, dass die Dauer der Nachhärtung vom verwendeten Harz abhängig ist.

Nach dem Durchhärten ist das Leichtbau-Verbundmaterial 10 fertiggestellt, wie es in Fig. 7 gezeigt ist, bei dem das im ausgehärteten Harz 32 eingebettete Fasermaterial 20 als Faserverbundmaterial jeweils die Deckschicht 34 bildet, welche über die Klebeschicht 18, die Trennschicht 16 und die Klebeschicht 14 fest mit dem Trägermaterial 12 verbunden ist.

In der nachfolgenden Tabelle 1 sind die verwendeten Materialien nochmals aufgelistet, wobei auch eine abgewandelte Ausführungsform aufgeführt ist.

**Tabelle 1: zwei Ausführungsbeispiele, die nach dem zuvor beschriebenen Verfahren gefertigt wurden**

| Beispiel | Trägermaterial | erste Klebeschicht | Trennschicht | zweite Klebeschicht | Fasermaterial | Harz |
|---|---|---|---|---|---|---|
| erstes Beispiel | Wabenmaterial | Epoxidharz | PES-Folie | Epoxidharz | PES-Vlies (Polyester) | Epoxid |
| | Nomex | | | | | |
| zweites Beispiel | Wabenmaterial | Epoxidharz | PES-Folie | Epoxidharz | GF-Gelege (Glasfaser) | Epoxid |
| | Nomex | | | | | |

Die beiden beschriebenen Ausführungsbeispiele stellen nur zwei Varianten einer Vielzahl von möglichen Kombinationen der verschiedenen Materialien dar. Des weiteren kann zwischen den verschiedenen Verfahren, nämlich dem Vakuuminfusionsverfahren, dem Vakuuminjektionsverfahren oder dem RTM-Verfahren (RTM = Resin Transfer Moulding) unterschieden werden, welche zur Herstellung des erfindungsgemäßen Verbundmaterials eingesetzt werden können.

So wird beim Vakuuminfusionsverfahren die zuvor beschriebene Vakuumfolie 24 eingesetzt, unter der ein Unterdruck erzeugt wird, welcher einem etwa 55-bis 95-prozentigem Vakuum entspricht.

Das flüssige Harz 32 wird unter die Vakuumfolie 24 geleitet, wobei der in dem abgeschlossenen Raum 30 unter der Vakuumfolie 24 wirkende Unterdruck das Harz 32 in das Fasermaterial 20 zieht.

Beim Vakuuminjektionsverfahren wird anstelle der Vakuumfolie eine feste Gegenform verwendet, die mit Hilfe eines Unterdrucks, welcher einem etwa 55- bis 95-prozentigem Vakuum entspricht, verschlossen wird. Das flüssige Harz 32 wird mit einem geringem Überdruck in die Form injiziert wird.

Mit dem RTM-Verfahren (Resin Transfer Moulding) können qualitativ sehr hochwertige Verbundmaterialien gefertigt werden, die beidseitig eine glatte Sichtoberfläche haben. Bei dem RTM-Verfahren wird die Anordnung 22 zwischen eine steife Unterform und eine steife Oberform gelegt und die beiden Formen verschlossen.

Anschließend wird das flüssige Harz 32 mit einem Druck von etwa 0,2 bis 8 bar in die geschlossene Form eingespritzt.

In der nachfolgenden Tabelle 2 sind die verschiedenen Verfahrensparameter, welche bei den verschiedenen Verfahren zur Herstellung des erfindungsgemäßen Verbundmaterials eingestellt werden, nochmals aufgelistet.

**Tabelle 2: Verfahrensparameter für die verschiedenen Verfahren**

| **Verfahrensparameter** | **Einstellung** |
|---|---|
| Temperatur bei der Vakuuminfusion | von Raumtemperatur bis etwa 140°C |
| Temperatur bei der Vakuuminjektion | von Raumtemperatur bis etwa 140°C |
| Temperatur beim RTM-Verfahren | von Raumtemperatur bis etwa 140°C |
| | |
| Druck bei der Vakuuminfusion | entspricht einem etwa 55 bis 95% Vakuum |
| Druck bei der Vakuuminjektion | entspricht einem etwa 55 bis 95% Vakuum |
| Druck beim RTM-Verfahren | etwa 0,2 bis 8 bar |
| | |
| Fülldruck des Harzes bei der Vakuuminfusion | Umgebungsdruck |
| Fülldruck des Harzes bei der Vakuuminjektion | geringer Überdruck |
| Fülldruck des Harzes beim RTM-Verfahren | etwa 0,2 bis 8 bar |
| | |
| Temperatur für das Aushärten | von Raumtemperatur bis 200°C |
| | |
| Druck für das Aushärten bei der Vakuuminfusion | entspricht einem etwa 75 bis 95% Vakuum |
| Druck für das Aushärten bei der Vakuuminjektion | entspricht einem etwa 75 bis 95% Vakuum |
| Druck für das Aushärten beim RTM-Verfahren | etwa 1,5 bis 2,0 bar |

Die angegebenen Werte stellen Erfahrungswerte dar, die jedoch vom jeweils zu fertigenden Bauteil abhängig sind. In der Tabelle 3 sind weitere Kombinationen von Materialien unterschiedlicher erfindungsgemäßer Verbundmaterialien aufgelistet, die sich als besonders vorteilhaft herausgestellt haben.

**Tabelle 3: Verschiedene Ausführungsbeispiele mit unterschiedlichen Materialkombinationen**

| Beispiele | Trägermaterial | erste Klebeschicht | Trennschicht | zweite Klebeschicht | Fasermaterial | Harz |
|---|---|---|---|---|---|---|
| erstes Beispiel | Wabenmaterial | Epoxidharz | PES-Folie | Epoxidharz | Vlies, Gelege, Gewebe, Schnittmatte oder Endlosmatte | Epoxid-, Phenol-, Vinylester-, Polyester-, oder Acrylharz |
| zweites Beispiel | poröses Schaummaterial | Epoxidharz | PES-Folie | Epoxidharz | Vlies, Gelege, Gewebe, Schnittmatte oder Endlosmatte | Epoxid-, Phenol-, Vinylester-, Polyester-, oder Acrylharz |
| drittes Beispiel | Wabenmaterial | Epoxidharz | PES-Folie | keine Klebeschicht | Vlies, Gelege, Gewebe, Schnittmatte oder Endlosmatte | Epoxid-, Phenol-, Vinylester-, Polyester-, oder Acrylharz |
| viertes Beispiel | Wabenmaterial | Epoxidharz | PES-Folie | Phenolharz | Vlies, Gelege, Gewebe, Schnittmatte oder Endlosmatte | Epoxid-, Phenol-, Vinylester-, Polyester-, oder Acrylharz |
| fünftes Beispiel | Wabenmaterial | keine Klebeschicht | Epoxidharz | keine Klebeschicht | Schaumfolie | Epoxid-, Phenol-, Vinylester-, Polyester-, oder Acrylharz |
| sechstes Beispiel | Wabenmaterial | Thermoplast | PES-Folie | Epoxidharz | Vlies, Gelege, Gewebe, Schnittmatte oder Endlosmatte | Epoxid-, Phenol-, Vinylester-, Polyester-, oder Acrylharz |
| siebtes Beispiel | Wabenmaterial | Thermoplast | PES-Folie | Thermoplast | Vlies, Gelege, Gewebe, Schnittmatte, oder Endlosmatte | Epoxid-, Phenol-, Vinylester-, Polyester-, oder Acrylharz |

Wie der Tabelle 3 zu entnehmen ist, sind die unterschiedlichsten Materialkombinationen möglich, wobei die Trennschicht 16 gegebenenfalls auch so ausgebildet sein kann, dass sie gleichzeitig sowohl als Trennschicht 16 als auch als Klebeschicht 14 zum Trägermaterial 12 und als Klebeschicht 18 zum Fasermaterial 20 dienen kann (vgl. fünftes Beispiel).

Aufgrund der Kombinationsmöglichkeiten, sind jedoch auch weitere Varianten möglich. Beispielsweise kann die Trennschicht 16 auch in Form einer dünnen Metallfolie ausgebildet sein.

### Bezugszeichenliste

- 10: Verbundmaterial
- 12: Trägermaterial
- 14: Klebeschichten
- 16: Trennschichten
- L: Öffnungen
- 18: Klebeschichten
- 20: Fasermaterial
- F: Fliesskanäle
- 22: Anordnung
- 24: Vakuumfolie
- 26: Dichtung
- 28: Vakuum
- 30: abgeschlossener Raum
- 32: Harz
- 34: Deckschicht

## Patentansprüche

1. Leichtbau-Verbundmaterial mit einem Leichtbau-Trägermaterial (12) und einer an mindestens einer Oberfläche des Trägermaterials (12) vorgesehenen Deckschicht (34), wobei zwischen der Oberfläche des Trägermaterials (12) und der Deckschicht (34) eine harzundurchlässige Trennschicht (16) vorgesehen ist, und die Deckschicht (34) aus einem Faser- oder Wabenmaterial (20) gebildet ist, welches in einem auf der Trennschicht (16) ausgehärteten Harzmaterial (32) eingebettet ist,
**dadurch gekennzeichnet,**
**dass** im Trägermaterial (12) und/oder in der Trennschicht (16) und/oder in dem Faser- oder Wabenmaterial (20) der auszubildenden Deckschicht (34) Fliesskanäle (F) und/oder Öffnungen (L) zum gleichmäßigen Verteilen des vor dem Aushärten flüssigen Harzmaterials (32) ausgebildet sind.

2. Leichtbauverbundmaterial nach Anspruch 1, **dadurch gekennzeichnet, dass** die Fliesskanäle (F) an mindestens einer der Flachseiten des Faser- oder Wabenmaterials (20) oder an der dem Faser- oder Wabenmaterial (20) zugewandten Flachseite der Trennschicht (16) ausgebildet sind.

3. Leichtbauverbundmaterial nach Anspruch 2, **dadurch gekennzeichnet, dass** die Fliesskanäle (F) in die Flachseite(n) des Fasermaterials (20) eingeprägt sind.

4. Leichtbauverbundmaterial nach Anspruch 2, **dadurch gekennzeichnet, dass** die Fliesskanäle (F) an der Flachseite bzw. an den Flachseiten des Wabenmaterials (20) ausgeformt sind.

5. Leichtbauverbundmaterial nach mindestens einem der Ansprüche 1 bis 4, **dadurch gekennzeichnet, dass** die Fliesskanäle (F) in einer wabenartigen Struktur verlaufen.

6. Leichtbau-Verbundmaterial nach mindestens einem der Ansprüche 1 bis 5, **dadurch gekennzeichnet, dass** die Öffnungen (L) in der Oberfläche des Trägermaterials (12) und/oder in der Trennschicht (16) vorzugsweise in Form von normal zur Oberfläche verlaufenden, durchgängigen Lochbohrungen ausgebildet sind.

7. Leichtbau-Verbundmaterial nach mindestens einem der vorhergehenden Ansprüche, **dadurch gekennzeichnet, dass** das Trägermaterial (12) flächig ist und an jeder seiner Flachseiten die Trennschicht (16) und die Deckschicht (34) vorgesehen ist.

8. Leichtbau-Verbundmaterial nach mindestens einem der vorhergehenden Ansprüche, **dadurch gekennzeichnet, dass** zwischen der Trennschicht (16) und dem Trägermaterial (12) eine erste Klebeschicht (14) vorgesehen ist.

9. Leichtbau-Verbundmaterial nach mindestens einem der vorhergehenden Ansprüche, **dadurch gekennzeichnet, dass** zwischen der Trennschicht (16) und der Deckschicht (34) eine zweite Klebeschicht (12) vorgesehen ist.

10. Leichtbau-Verbundmaterial nach mindestens einem der vorhergehenden Ansprüche, **dadurch gekennzeichnet, dass** als Fasermaterial (20) für die Deckschicht (34) ein Gewebe, ein Gelege, ein Geflecht, ein Gewirk, ein Gestrick, ein Vlies oder ein Hybridmaterial dient.

11. Leichtbau-Verbundmaterial nach mindestens einem der vorhergehenden Ansprüche, **dadurch gekennzeichnet, dass** das Trägermaterial (12) eine vorzugsweise gleichmäßige Wabenstruktur aufweist.

12. Leichtbau-Verbundmaterial nach Anspruch 11, **dadurch gekennzeichnet, dass** das Trägermaterial (12) eine Wabenstruktur aus Metall, vorzugsweise einer Wabenstruktur aus Aluminium, oder eine Wabenstruktur aus Papier, Pappe oder Kunststoff ist.

13. Leichtbau-Verbundmaterial nach mindestens einem der vorhergehenden Ansprüche 1 bis 10, **dadurch gekennzeichnet, dass** das Trägermaterial (12) ein vorzugsweise offenporiges Schaumstoffmaterial ist.

14. Leichtbau-Verbundmaterial nach mindestens einem der vorhergehenden Ansprüche 1 bis 10, **dadurch gekennzeichnet, dass** das Trägermaterial (12) aus Balsa-Holz gefertigt ist.

## Claims

1. A lightweight composite material with a lightweight support material (12) and a cover layer (34) provided on at least one surface of the carrier material (12), wherein a separating layer (16) impermeable to resin is provided between the surface of the carrier material (12) and the cover layer (34), and the cover layer (34) is formed from a fibrous or honeycomb material (20) which is embedded in a resin material (32) hardened on the separating layer (16),
**characterised in that**
flow channels (F) and/or openings (L) for the uniform distribution of the resin material (32), which is liquid before hardening, are formed in the carrier material (12) and/or in the separating layer (16) and/or in the fibrous or honeycomb material (20) of the cover layer (34) to be formed.

2. A lightweight composite material according to claim 1, **characterised in that** the flow channels (F) are formed on at least one of the flat sides of the fibrous or honeycomb material (20) or on the flat side of the separating layer (16) facing the fibrous or honeycomb material (20).

3. A lightweight composite material according to claim 2, **characterised in that** the flow channels (F) are impressed in the flat side(s) of the fibrous material (20).

4. A lightweight composite material according to claim 2, **characterised in that** the flow channels (F) are formed on the flat side or on the flat sides of the honeycomb material (20).

5. A lightweight composite material according to at least any one of claims 1 to 4, **characterised in that** the flow channels (F) run in a honeycomb-like structure.

6. A lightweight composite material according to at least any one of claims 1 to 5, **characterised in that** the openings (L) in the surface of the carrier material (12) and/or in the separating layer (16) are preferably in the form of continuous bores, extending normally with respect to the surface.

7. A lightweight composite material according to at least any one of the preceding claims, **characterised in that** the carrier material (12) is flat and the separating layer (16) and the cover layer (34) are provided on each of its flat sides.

8. A lightweight composite material according to at least any one of the preceding claims, **characterised in that** a first adhesive layer (14) is provided between the separating layer (16) and the carrier material (12).

9. A lightweight composite material according to at least any one of the preceding claims, **characterised in that** a second adhesive layer (12) is provided between the separating layer (16) and the cover layer (34).

10. A lightweight composite material according to at least any one of the preceding claims, **characterised in that** a woven material, a fabric, a braiding, an interlaced material, a knitted material, a nonwoven or a hybrid material is used as the fibrous material (20) for the cover layer (34).

11. A lightweight composite material according to at least any one of the preceding claims, **characterised in that** the carrier material (12) has a preferably uniform honeycomb structure.

12. A lightweight composite material according to claim 11, **characterised in that** the carrier material (12) is a honeycomb structure made of metal, preferably a honeycomb structure made of aluminium, or a honeycomb structure made of paper, paperboard or plastics material.

13. A lightweight composite material according to at least any one of the preceding claims 1 to 10, **characterised in that** the carrier material (12) is a preferably open-pore foamed material.

14. A lightweight composite material according to at least any one of the preceding claims 1 to 10, **characterised in that** the carrier material (12) is manufactured from balsa wood.

## Revendications

1. Matériau composite pour construction légère comprenant un matériau support pour construction légère (12) et une couche de revêtement (34) prévue sur au moins une surface du matériau support (12), une couche de séparation (16) imperméable à la résine étant prévue entre la surface du matériau support (12) et la couche de revêtement (34), et la couche de revêtement (34) étant formée à base d'un matériau fibreux ou d'un matériau en nid d'abeilles (20), qui est intégré dans un matériau de résine (32) durci sur la couche de séparation (16),
**caractérisé en ce que**
des canaux d'écoulement (F) et/ou des ouvertures (L) pour la répartition uniforme du matériau de résine (32) liquide avant le durcissement, sont réalisés dans le matériau support (12) et/ou dans la couche de séparation (16) et/ou dans le matériau fibreux ou le matériau en nid d'abeilles (20) de la couche de revêtement (34) à former.

2. Matériau composite pour construction légère selon la revendication 1, **caractérisé en ce que** les canaux d'écoulement (F) sont réalisés sur au moins l'un des côtés plats du matériau fibreux ou du matériau en nid d'abeilles (20) ou sur le côté plat, tourné vers le matériau fibreux ou le matériau en nid d'abeilles (20), de la couche de séparation (16).

3. Matériau composite pour construction légère selon la revendication 2, **caractérisé en ce que** les canaux d'écoulement (F) sont intégrés dans le(s) côté(s) plat(s) du matériau fibreux (20).

4. Matériau composite pour construction légère selon la revendication 2, **caractérisé en ce que** les canaux d'écoulement (F) sont formés sur le côté plat ou les côtés plats du matériau en nid d'abeilles (20).

5. Matériau composite pour construction légère selon au moins l'une quelconque des revendications 1 à 4,
**caractérisé en ce que** les canaux d'écoulement (F) sont agencés dans une structure en nid d'abeilles.

6. Matériau composite pour construction légère selon au moins l'une quelconque des revendications 1 à 5, **caractérisé en ce que** les ouvertures (L) sont réalisées dans la surface du matériau support (12) et/ou dans la couche de séparation (16) de préférence sous la forme de perçages de trou continus et agencés perpendiculairement à la surface.

7. Matériau composite pour construction légère selon au moins l'une quelconque des revendications précédentes, **caractérisé en ce que** le matériau support (12) est plan et la couche de séparation (16) et la couche de revêtement (34) sont prévues sur chacun de ses côtés plats.

8. Matériau composite pour construction légère selon au moins l'une quelconque des revendications précédentes, **caractérisé en ce qu'**une première couche adhésive (14) est prévue entre la couche de séparation (16) et le matériau support (12).

9. Matériau composite pour construction légère selon au moins l'une quelconque des revendications précédentes, **caractérisé en ce qu'**une seconde couche adhésive (12) est prévue entre la couche de séparation (16) et la couche de revêtement (34).

10. Matériau composite pour construction légère selon au moins l'une quelconque des revendications précédentes, **caractérisé en ce qu'**un tissage, un tissu non-tissé, un treillis, un maillage, un tricotage, un non-tissé ou un matériau hybride sert de matériau fibreux (20) pour la couche de revêtement (34).

11. Matériau composite pour construction légère selon au moins l'une quelconque des revendications précédentes, **caractérisé en ce que** le matériau support (12) présente une structure en nid d'abeilles de préférence uniforme.

12. Matériau composite pour construction légère selon la revendication 11, **caractérisé en ce que** le matériau support (12) est une structure en nid d'abeilles à base de métal, de préférence une structure en nid d'abeilles à base d'aluminium, ou une structure en nid d'abeilles à base de papier, carton ou plastique.

13. Matériau composite pour construction légère selon au moins l'une quelconque des revendications précédentes 1 à 10, **caractérisé en ce** le matériau support (12) est un matériau alvéolaire de préférence à pores ouverts.

14. Matériau composite pour construction légère selon au moins l'une quelconque des revendications précédentes 1 à 10, **caractérisé en ce que** le matériau support (12) est fabriqué à base de bois de balsa.
